# EUROPEAN PATENT SPECIFICATION

(11) **EP 4 444 830 B1**
(45) Date of publication and mention of the grant of the patent: **17.09.2025**
(21) Application number: 22822987.8
(22) Date of filing: 29.11.2022
(51) Int. Cl.: C10M 149/06, C08F 290/04, C10N 20/02, C10N 30/02

(54) **VISCOSITY INDEX IMPROVER FOR LUBRICANTS BASED ON POLYISOBUTYLENE ACRYLAMIDE COMB COPOLYMERS**
VISKOSITÄTSINDEXVERBESSERER FÜR SCHMIERMITTEL AUF BASIS VON POLYISOBUTYLENACRYLAMID-KAMM-COPOLYMEREN
AGENT AMÉLIORANT L'INDICE DE VISCOSITÉ POUR LUBRIFIANTS À BASE DE COPOLYMÈRES EN PEIGNE DE POLYISOBUTYLÈNE ACRYLAMIDE

(30) Priority: 06.12.2021 EP 21212545
(43) Date of publication of application: 16.10.2024
(73) Proprietor: BASF SE, 67056 Ludwigshafen am Rhein (DE)
(72) Inventor: GARCIA CASTRO, Ivette, 67056 Ludwigshafen (DE); KOSCHABEK, Rene, 67056 Ludwigshafen (DE); MISSKE, Andrea, 67056 Ludwigshafen (DE); FLECKENSTEIN, Christoph, 67056 Ludwigshafen (DE)
(74) Representative: BASF IP Association
(86) International application number: PCT/EP2022/083581
(87) International publication number: WO 2023/104579

(56) References cited:
- US-A- 5 597 871
- US-A1- 2008 194 443

## Description

The present invention relates to a comb copolymer comprising in polymerized form up to 40 wt% of a PIB macromonomer of the formula (I) and a hydrophobic monomer of the formula (II). The invention further relates to a method of preparing the PIB macromonomer of the formula (I) where a polyisobutene amine of the formula (IV) is reacted with (meth)acrylic acid anhydride; and to a lubricant comprising a base oil, the comb copolymer, and further lubricant additives; and to a use of the comb copolymer for improving the viscosity index of a lubricating oil. Combinations of preferred embodiments with other preferred embodiments are within the scope of the present invention.

Comb polymers are useful additives for lubricants. Polyisobutylene (PIB) based macromonomers are useful comonomers in comb polymers. However, they are difficult to synthesize.

WO 2007/003238 discloses the aminolysis of methyl methacrylate with a polyisobutylene amine to synthesize a macromonomers. This method has the disadvantages that high temperatures are required, that the catalyst has to be removed by phase separation, that traces of the catalysts end up as byproduct in the final product, that Michael addition byproducts of the amine to the methacrylated double bond can be formed, that high amounts of stabilizers are required to reduce polymerization of the methacrylate.

Objects were to overcome above disadvantages and to find an improved synthesis of macromonomers and of comb polymers and improved lubricants containing the comb polymers. Further objective was to improve lubricants containing a polymer, where the lubricant has good rheological behavior, a low polymer treat rate, a high viscosity index, a easy handly of the pure polymer solution, a good low temperature performance (e.g. in the cold crankcase simulation), a low viscosity under operating conditions (e.g. in the high temperature high shear HTHS viscosity test), a high shear stability, or a low viscosity loss after many use cycles.

The object was solved by a comb copolymer comprising in polymerized form
(A) up to 40 wt% of a PIB macromonomer of the formula (I) 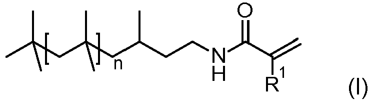 where R¹ is H or methyl, and n is a number from 5 to 100 , and
(B) an hydrophobic monomer of the formula (II)

   H₂C=C(R¹)COOR² (II)

   where R¹ is H or methyl, and R² is C₅₋₃₆ alkyl.
R¹ can be H or methyl, where methyl is preferred. R¹ can be different or the same in the formula (I), (II) and (III).

The index n can be a number from 5 to100, preferably from 10 to 80 and in particular from 15 to 65.

The PIB macromonomer may have **molecular weight** of 300 to 10.000 g/mol, preferably of 400 to 5000 g/mol, and in particular of 800 to 2500 g/mol.

The molecular weight of the PIB macromonomer can determined by GPC using polystyrene standards (e.g. DIN 55672-1).

The synthesis of the PIB macromonomers is known from WO 2007/003238.

The comb copolymer may comprise up to 40, preferably up to 35 and in particular up to 30 wt% of the PIB macromonomer.

Typically, the comb copolymer comprises 5 - 30 wt%, preferably 10 - 30 wt%, and in particular 15 - 25 wt% of the PIB macromonomer.

The wt% of a monomer usually refer to percentage by weight based on the weight of all monomers in the comb copolymer. The sum of all wt% of all monomers in the comb copolymer (e.g. the PIB macromonomer, the hydrophobic monomer, and the hydrophilic monomer) is usually 100 wt%.

R² in the hydrophobic monomer can be a linear, branched or cyclic alkyl, preferably a linear or branched alkyl, and in particular a branched alkyl.

Suitable R² are pentyl, hexyl, heptyl, octyl, 2-ethylhexyl, 2-propyl heptyl, 2-butyloctyl, nonyl, decyl, stearyl, lauryl, octadecyl, heptadecyl, 2-hexyldecyl, nonadecyl, eicosyl, henicosyl, docosyl, tricosyl, tetracosyl, pentacosyl, hexacosyl, heptacosyl, octacosyl, nonacosyl, triacontyl, behenyl, 2-octyldodecyl , 2-decyltetradecyl, 2-dodecyhexadecyl, 2-tetradecyloctydecyl, or mixtures thereof.

R² is preferably hexyl, heptyl, octyl, 2-ethylhexyl, 2-propyl heptyl, 2-butyloctyl, nonyl, decyl, stearyl, lauryl, octadecyl, heptadecyl, 2-hexyldecyl, nonadecyl, eicosyl, henicosyl, docosyl or mixtures thereof.

R² is preferably a C₆₋₁₂ alkyl, in particular a C₆₋₁₀ alkyl. In a preferred form R² is a linear or branched C₆₋₁₂ alkyl. In another preferred form R² is a branched C₆₋₁₀ alkyl. In another preferred form R² is 2-ethylhexyl or 2-propyl heptyl, in particular 2-ethylhexyl. In another preferred form the hydrophobic monomer is 2-ethylhexyl methacrylate.

In another preferred form R² is a C₆₋₂₄ alkyl, in particular a C₆₋₂₀ alkyl. In another preferred form R² is a linear or branched C₆₋₂₄ alkyl.

In another preferred form R² is mixture of C₅₋₃₆ alkyl, such as of pentyl, hexyl, heptyl, octyl, 2-ethylhexyl, 2-propyl heptyl, 2-butyloctyl, nonyl, decyl, stearyl, lauryl, octadecyl, heptadecyl, 2-hexyldecyl, nonadecyl, eicosyl, henicosyl, docosyl, tricosyl, tetracosyl, pentacosyl, hexacosyl, heptacosyl, octacosyl, nonacosyl, triacontyl, behenyl, 2-octyldodecyl , 2-decyltetradecyl, 2-dodecyhexadecyl, or 2-tetradecyloctydecyl.

In another preferred form R² is a mixture of at least two of C₅₋₃₆ alkyl.

In another preferred form R² is a mixture of at least two (in particular two or three) residues selected from the group consisting of pentyl, hexyl, heptyl, octyl, 2-ethylhexyl, 2-propyl heptyl, 2-butyloctyl, nonyl, decyl, stearyl, lauryl, octadecyl, heptadecyl, 2-hexyldecyl, nonadecyl, eicosyl, henicosyl, docosyl, tricosyl, tetracosyl, pentacosyl, hexacosyl, heptacosyl, octacosyl, nonacosyl, triacontyl, behenyl, 2-octyldodecyl , 2-decyltetradecyl, 2-dodecyhexadecyl, and 2-tetradecyloctydecyl.

In another preferred form R² is a mixture of at least two (in particular two or three) residues selected from the group consisting of hexyl, heptyl, octyl, 2-ethylhexyl, 2-propyl heptyl, 2-butyloctyl, nonyl, decyl, stearyl, lauryl, octadecyl, heptadecyl, 2-hexyldecyl, and nonadecyl.

In another preferred form R² is a mixture of a C₆₋₁₀ alkyl and a residue selected from stearyl, lauryl, octadecyl, heptadecyl, 2-hexyldecyl, nonadecyl, eicosyl, henicosyl, docosyl, tricosyl, tetracosyl, pentacosyl, hexacosyl, heptacosyl, octacosyl, nonacosyl, triacontyl, behenyl, 2-octyldodecyl , 2-decyltetradecyl, 2-dodecyhexadecyl, and 2-tetradecyloctydecyl.

The comb copolymer may comprise at least 30 wt%, preferably at least 40 wt%, and in particular at least 50 wt% of the hydrophobic monomer.

The comb copolymer may comprise up to 85 wt%, preferably up to 80 wt%, and in particular up to 75 wt% of the hydrophobic monomer.

Typically, the comb copolymer comprises 40 - 90 wt%, preferably 50 - 85 wt%, and in particular 60 - 80 wt% of the hydrophobic monomer.

The comb copolymer may further comprise a **hydrophilic monomer** of the formula (III)

H₂C=C(R¹)COOR³ (III)

where R³ is C₁₋₄ alkyl.

Suitable R³ is methyl, ethyl, n-propyl, i-propyl, n-butyl, i-butyl, sec-butyl, tert-butyl, or mixtures thereof. Preferably, R³ is methyl, ethyl, n-butyl, in particular methyl. In another preferred form the hydrophilic monomer is methyl methacrylate.

The comb copolymer may comprise at least 1 wt%, preferably at least 3 wt%, and in particular at least 5 wt% of the hydrophilic monomer.

The comb copolymer may comprise up to 30 wt%, preferably up to 20 wt%, and in particular up to 15 wt% of the hydrophilic monomer.

Typically, the comb copolymer comprises 1 - 25 wt%, preferably 3 - 20 wt%, and in particular 5 - 15 wt% of the hydrophilic monomer.

The comb copolymer may comprise **further monomers** different from the PIB macromonomer, the hydrophobic monomer or the hydrophilic monomer. As further comonomers can be employed:
- hydroxyl-, epoxy- or amino-functional (meth)acrylates
- vinylaromatic compounds, such as styrene, alpha-methylstyrene, vinyltoluene or p-(tert-butyl) styrene;
- acrylic and methacrylic acid;
- acrylamide and methacrylamide;
- maleic acid and the imides and C1 -C10 -alkyl esters thereof;
- fumaric acid and the imides and C1 -C10 -alkyl esters thereof;
- itaconic acid and the imides and C1 -C10 -alkyl esters thereof;
- acrylonitrile and methacrylonitrile.

The comb copolymer may comprise up to 15 wt%, preferably up to 5 wt%, and in particular up to 1 wt% of the further monomer. In another form the comb copolymer is free of the further monomer.

In a preferred form the comb copolymer comprises
- 5 - 35 wt% PIB macromonomer,
- 40 - 95 wt% hydrophobic monomer, and
- 1 - 30 wt% hydrophilic monomer,
where the sum of all monomers is 100 wt%.

In another preferred form the comb copolymer comprises
- 5 - 35 wt% PIB macromonomer,
- 40 - 85 wt% hydrophobic monomer, and
- 5 - 30 wt% hydrophilic monomer,
where the sum of all monomers is 100 wt%.

In another preferred form the comb copolymer comprises
- 5 - 30wt% PIB macromonomer,
- 50 - 95 wt% hydrophobic monomer, and
- 1 - 25 wt% hydrophilic monomer,
where the sum of all monomers is 100 wt%.

In another preferred form the comb copolymer comprises
- 10 - 30 wt% PIB macromonomer,
- 50 - 80 wt% hydrophobic monomer, and
- 3 - 20 wt% hydrophilic monomer,
where the sum of all monomers is 100 wt%.

In another preferred form the comb copolymer comprises
- 10 - 30 wt% PIB macromonomer,
- 60 - 85 wt% hydrophobic monomer, and
- 5 - 15 wt% hydrophilic monomer,
where the sum of all monomers is 100 wt%.

The comb copolymer may have a **molecular weight Mn** from 10,000 to 1,500,000 g/mol, preferably from 20,000 to 1,000,000 g/mol, and in particular from 50,000 to 200,000 g/mol.

The comb copolymer may have a **molecular weight Mw** from 50,000 to 2,000,000 g/mol, preferably from 100,000 to 1,000,000 g/mol, and in particular from 200,000 to 600,000 g/mol.

The comb copolymer may have a **polydispersity index (PDI)** from 1,5 - 5,0, preferably from 2,0 - 4,5, and in particular from 2,9 - 4,1.

The molecular weight of the comb copolymer can be determined by GPC using polystyrene standards (e.g. DIN 55672-1).

The **kinematic viscosity** at 100 °C (KV100, usually measured with Brookfield viscometer.) of the comb copolymer in a 30 wt% solution of a base oil (e.g. Nexbase^{®} 3030) can be below 600 mm²/s, preferably below 300 mm²/s, and in particular below 150 mm²/s.

The comb copolymer can be prepared by conventional **free-radical polymerization,** such as bulk polymerization or solution polymerization, where the latter is preferred.

In the solution polymerization the reaction mixture may comprises a diluent, the monomers, a polymerization initiator and optionally a chain transfer agent and optionally a crosslinker. The diluent may be any inert hydrocarbon. The concentration of total monomers may range from about 30 to 100%. As used herein, "total monomer charge" means the combined amount of all monomers in the initial reaction mixture.

The diluent may be any inert hydrocarbon or an dicarboxylic ester, which is an diester of at least one linear or branched C2-C20 dicarboxylic acid with at least one linear or branched C1-C20 monoalcohol. The dicarboxylic ester preferably is derived from the reaction of a dicarboxylic acid with an aliphatic alcohol. Preferred dicarboxylic acids are adipic acid, pimelic acid, suberic acid, azelaic acid and sebacic acid and mixtures thereof. The dicarboxylic acid ester component is preferably formed from such dicarboxylic acids by esterification with medium-size aliphatic alcohols, which can be linear or branched, preferably C5 to C20 alcohol, more preferably C9 to C15 aliphatic alcohol and most preferably nonanol, isodecanol, isotridecanol and 2s-propyl heptanol. The diluent is preferably di-(2-propylheptyl)-adipat or diisononyl adipat, in particular di-(2-propylheptyl)-adipat.

Preferably, the comb copolymer is present in a diluent, which is a dicarboxylic ester, preferably a diester of at least one linear or branched C2-C20 dicarboxylic acid with at least one linear or branched C1-C20 monoalcohol, and in particular di-(2-propylheptyl)-adipat.

Suitable polymerization initiators include initiators which disassociate upon heating to yield a free radical, e.g., peroxide compounds such as benzoyl peroxide, t-butyl perbenzoate, t-butyl peroctoate and cumene hydroperoxide; and azo compounds such as azoisobutyronitrile and 2,2'-azobis (2-methylbutanenitrile). The mixture includes from about 0.001 wt percent to about 5.0 wt percent initiator relative to the total monomer mixture. For example, 0.02 weight percent to about 4.0 weight percent, 0.02 weight percent to about 3.5 weight percent are envisioned. Typically, about 0.02 weight percent to about 2.0 weight percent are used.

Suitable chain transfer agents include mercaptanes and alcohols. For example, tridecyl mercap-tane, dodecyl mercaptane and ethyl mercaptane, but also bifunctional mercaptanes, such hexanedithiol may be used as chain transfer agents. The selection of the amount of chain transfer agent to be used is based on the desired molecular weight of the polymer being synthesized. The chain transfer agent is often added to the reaction mixture or monomer feed in an amount of 0.001 to 3 weight percent relative to the monomer mixture.

All components may be charged to a reaction vessel that is equipped with a stirrer, a thermometer and a reflux condenser and heated with stirring under a nitrogen blanket to a temperature from about 50 degrees centigrade to about 125 degrees centigrade for a period of about 0.5 hours to about 15 hours to carry out the polymerization reaction.

The invention is also relates to a **method of preparing the PIB macromonomer** of the formula (I) 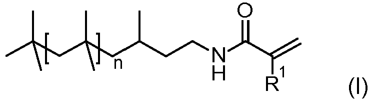
where R¹ is H or methyl, and n is a number from 5 to 100 ,
where a polyisobutene amine (also called PIB-amine) of the formula (IV) 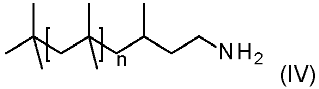
is reacted with (meth)acrylic acid anhydride.

Polyisobutylene amines are can be prepared for example as described in EP0244616 and they are commercially available. The PIB-amine may have molecular weight of 300 to 10.000 g/mol, preferably of 400 to 5000 g/mol, and in particular of 800 to 2500 g/mol. The index n in the PIB-amine is usually the same as in the PIB macromonomer, e.g. it can be a number from 5 to100, preferably from 10 to 80 and in particular from 15 to 65.

The PIB-amine is preferably reacted with methacrylic anhydride.

A typical reaction scheme for the reaction of PIB-amine with methacrylic anhydride is:

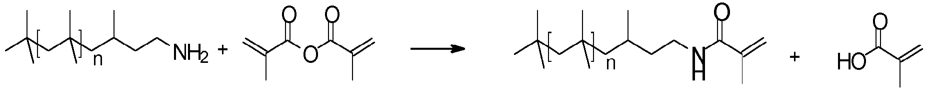

The (meth)acrylic acid anhydride is preferably present in a molar excess in relation to the polyisobutene amine, e.g. in at least 1,1, 1,5 or 2-fold molar excess.

The reaction between the PIB-amine and the meth)acrylic acid anhydride is usually followed by hydrolysis of the remaining (meth)acrylic acid anhydride to form (meth)acrylic acid. The (meth)acrylic acid can be removed by distillation or by extraction with water.

The reaction between the PIB-amine and the meth)acrylic acid anhydride can take place at a reaction temperature in the range from 0 - 50 °C, preferably 10 - 40 °C.

The reaction between the PIB-amine and the meth)acrylic acid anhydride can take place in an organic solvent, such as a hydrocarbon solvent.

The invention also relates to a **lubricant** comprising
(i) a base oil,
(ii) the comb copolymer or the comb copolymer obtainable by the method according to the invention, and
(iii) further lubricant additives.

The lubricant may comprise at least 0.1 wt%, preferably at least 0.5 wt% and in particular at least 1 wt% of the comb copolymer. In another form the lubricant may comprise 0.1 - 20 wt%, preferably 0.1 - 150 wt% and in particular at least 0.1 - 10 wt% of the comb copolymer.

The lubricant may comprise at least 30 wt%, preferably at least 50 wt% and in particular at least 70 wt% of the base oil. The lubricant may comprise 30 - 99.9 wt%, preferably 50 - 99 wt% and in particular 70 - 95 wt% of the base oil.

The lubricant may comprise up to 20 wt%, preferably up to 15 wt% and in particular up to 10 wt% of the further lubricant additive.

Lubricants usually refers to composition which are capable of reducing friction between surfaces (preferably metal surfaces), such as surfaces of mechanical devices. A mechanical device may be a mechanism consisting of a device that works on mechanical principles. Suitable mechanical device are bearings, gears, joints and guidances. The mechanical device may be operated at temperatures in the range of -30 C to 80 °C. The lubricant is usually a lubricating liquid, lubricating oil or lubricating grease.

Lubricants are usually specifically formulated for virtually every type of machine and manufacturing process. The type and concentration of base oils and/or lubricant additives used for these lubricants may be selected based on the requirements of the machinery or process being lubricated, the quality required by the builders and the users of the machinery, and the government regulation. Typically, each lubricant has a unique set of performance requirements. In addition to proper lubrication of the machine or process, these requirements may include maintenance of the quality of the lubricant itself, as well as the effect of the lubricant' s use and disposal on energy use, the quality of the environment, and on the health of the user.

Typical lubricants are automotive lubricants (e.g. gasoline engine oils, diesel engine oils, gas engine oils, gas turbine oils, automatic transmission fluids, gear oils) and industrial lubricants (e.g. industrial gear oils, pneumatic tool lubricating oil, high temperature oil, gas compressor oil, hydraulic fluids, metalworking fluids).

Examples for lubricants are axel lubrication, medium and heavy duty engine oils, industrial engine oils, marine engine oils, automotive engine oils, crankshaft oils, compressor oils, refrigerator oils, hydrocarbon compressor oils, very low-temperature lubricating oils and fats, high temperature lubricating oils and fats, wire rope lubricants, textile machine oils, refrigerator oils, aviation and aerospace lubricants, aviation turbine oils, transmission oils, gas turbine oils, spindle oils, spin oils, traction fluids, transmission oils, plastic transmission oils, passenger car transmission oils, truck transmission oils, industrial transmission oils, industrial gear oils, insulating oils, instrument oils, brake fluids, transmission liquids, shock absorber oils, heat distribution medium oils, transformer oils, fats, chain oils, minimum quantity lubricants for metalworking operations, oil to the warm and cold working, oil for water-based metalworking liquids, oil for neat oil metalworking fluids, oil for semi-synthetic metalworking fluids, oil for synthetic metalworking fluids, drilling detergents for the soil exploration, hydraulic oils, in biodegradable lubricants or lubricating greases or waxes, chain saw oils, release agents, molding fluids, gun, pistol and rifle lubricants or watch lubricants and food grade approved lubricants.

The lubricant has usually may have a kinematic viscosity at 40 °CC of at least 10, 50, 100, 150, 200, 300, 400, 500, 600, 900, 1400, or 2000 mm²/s. In another form the lubricant has usually may have a kinematic viscosity at 40 °C from 200 to 30 000 mm²/s (cSt), preferably from 500 to 10 000 mm²/s, and in particular from 1000 to 5000 mm²/s.

The lubricant has usually may have a kinematic viscosity at 100 °C of at least 2, 3, 5, 10, 20, 30, 40, or 50 mm²/s. In another form the lubricant may have a kinematic viscosity at 100 ° C from 10 to 5000 mm²/s (cSt), preferably from 30 to 3000 mm²/s, and in particular from 50 to 2000 mm²/s

The lubricant may have a viscosity index (VI) of at least 150, 160, 170, 180, 190 or 200.

The **base oil** may selected from the group consisting of mineral oils (Group I, II or III oils), polyalphaolefins (Group IV oils), polymerized and interpolymerized olefins, alkyl naphthalenes, alkylene oxide polymers, silicone oils, phosphate esters and carboxylic acid esters (Group V oils). Preferably, the base oil is selected from Group I, Group II, Group III base oils according to the definition of the API, or mixtures thereof. Definitions for the base oils are the same as those found in the American Petroleum Institute (API) publication "Engine Oil Licensing and Certification System", Industry Services Department, Fourteenth Edition, December 1996, Addendum 1, December 1998. Said publication categorizes base oils as follows:
a) Group I base oils contain less than 90 percent saturates (ASTM D 2007) and/or greater than 0.03 percent sulfur (ASTM D 2622) and have a viscosity index (ASTM D 2270) greater than or equal to 80 and less than 120.
b) Group II base oils contain greater than or equal to 90 percent saturates and less than or equal to 0.03 percent sulfur and have a viscosity index greater than or equal to 80 and less than 120.
c) Group III base oils contain greater than or equal to 90 percent saturates and less than or equal to 0.03 percent sulfur and have a viscosity index greater than or equal to 120.
d) Group IV base oils contain polyalphaolefins. Polyalphaolefins (PAO) include known PAO materials which typically comprise relatively low molecular weight hydrogenated polymers or oligomers of alphaolefins which include but are not limited to C2 to about C32 alphaole-fins with the C8 to about C16 alphaolefins, such as 1-octene, 1-decene, 1-dodecene and the like being preferred. The preferred polyalphaolefins are poly-1-octene, poly-1-decene, and poly-1-dode-cene.
e) Group V base oils contain any base oils not described by Groups I to IV. Examples of Group V base oils include alkyl naphthalenes, alkylene oxide polymers, silicone oils, and phosphate esters.

Synthetic base oils include hydrocarbon oils and halo-substituted hydrocarbon oils such as pol-ymerized and interpolymerized olefins (e.g., polypropylenes, propylene-isobutylene copolymers, chlorinated polybutylenes, poly(1-hexenes), poly(1-octenes), poly(1-decenes)); alkylbenzenes (e.g., dodecylbenzenes, tetradecylbenzenes, dinonylbenzenes, di(2-ethylhexyl)benzenes); poly-phenyls (e.g., biphenyls, terphenyls, alkylated polyphenols); and alkylated diphenyl ethers and alkylated diphenyl sulfides and derivative, analogs and homologs thereof.

Alkylene oxide polymers and interpolymers and derivatives thereof where the terminal hydroxyl groups have been modified by esterification, etherification, etc., constitute another class of known synthetic base oils. These are exemplified by polyoxyalkylene polymers prepared by polymeriza-tion of ethylene oxide or propylene oxide, and the alkyl and aryl ethers of polyoxyalkylene poly-mers (e.g., methyl-polyiso-propylene glycol ether having a molecular weight of 1000 or diphenyl ether of polyethylene glycol having a molecular weight of 1000 to 1500); and mono- and polycar-boxylic esters thereof, for example, the acetic acid esters, mixed C3-C8 fatty acid esters and C13 oxo acid diester of tetraethylene glycol.

Silicon-based oils such as the polyalkyl-, polyaryl-, polyalkoxy- or polyaryloxysilicone oils and sili-cate oils comprise another useful class of synthetic base oils; such base oils include tetraethyl silicate, tetraisopropyl silicate, tetra-(2- ethylhexyl)silicate, tetra-(4-methyl-2-ethylhe-xyl) silicate, tetra-(p-tert-butyl-phenyl) silicate, hexa-(4-methyl-2-ethylhexyl)disiloxane, poly(methyl) siloxanes and poly(methylphenyl)siloxanes. Other synthetic base oils include liquid esters of phosphorous-containing acids (e.g., tricresyl phosphate, trioctyl phosphate, diethyl ester of decylphosphonic acid) and polymeric tetrahydrofurans.

Suitable **lubricant additives** may be selected from viscosity index improvers, polymeric thickeners, antioxidants, corrosion inhibitors, detergents, dispersants, anti-foam agents, dyes, wear protection additives, extreme pressure additives (EP additives), anti-wear additives (AW additives), friction modifiers, metal deactivators, pour point depressants.

The viscosity index improvers include high molecular weight polymers that increase the relative viscosity of an oil at high temperatures more than they do at low temperatures. Viscosity index improvers include polyacrylates, polymethacrylates, alkylmethacrylates, vinylpyrrolidone/me-thacrylate copolymers, poly vinylpyrrolidones, polybutenes, olefin copolymers such as an ethylene-propylene copolymer or a styrene-butadiene copolymer or polyalkene such as PIB, styrene/acrylate copolymers and polyethers, and combinations thereof. The most common VI improvers are methacrylate polymers and copolymers, acrylate polymers, olefin polymers and copolymers, and styrenebutadiene copolymers. Other examples of the viscosity index improver include polymethacrylate, polyisobutylene, alpha-olefin polymers, alpha-olefin copolymers (e.g., an ethylenepropylene copolymer), polyalkylstyrene, phenol condensates, naphthalene condensates, a styrenebutadiene copolymer and the like. Of these, polymethacrylate having a number average molecular weight of 10000 to 300000, and alpha-olefin polymers or alpha-olefin copolymers having a number average molecular weight of 1000 to 30000, particularly ethylene- alpha-olefin copolymers having a number average molecular weight of 1000 to 10000 are preferred. The viscosity index increasing agents can be added and used individually or in the form of mixtures, conveniently in an amount within the range of from ≥ 0.05 to ≤ 20.0 % by weight, in relation to the weight of the base stock.

Suitable (polymeric) **thickeners** include, but are not limited to, polyisobutenes (PIB), oligomeric co-polymers (OCPs), polymethacrylates (PMAs), copolymers of styrene and butadiene, or high viscosity esters (complex esters).

**Antioxidants** include phenolic antioxidants such as hindered phenolic antioxidants or non-phenolic oxidation inhibitors.

Useful phenolic antioxidants include hindered phenols. These phenolic antioxidants may be ashless (metal-free) phenolic compounds or neutral or basic metal salts of certain phenolic compounds. Typical phenolic antioxidant compounds are the hindered phenolics which are the ones which contain a sterically hindered hydroxyl group, and these include those derivatives of dihydroxy aryl compounds in which the hydroxyl groups are in the *o*- or *p-*position to each other. Typical phenolic antioxidants include the hindered phenols substituted with alkyl groups having 6 carbon atoms or more and the alkylene coupled derivatives of these hindered phenols. Examples of phenolic materials of this type 2-t-butyl-4-heptyl phenol; 2-t-butyl-4-octyl phenol; 2-t-butyl-4-dodecyl phenol; 2,6-di-tbutyl-4-heptyl phenol; 2,6-di-t-butyl-4-dodecyl phenol; 2-methyl-6-t-butyl-4-heptyl phenol; and 2-methyl-6-t-butyl-4-dodecyl phenol. Other useful hindered mono-phenolic antioxidants may include for example hindered 2,6-di-alkyl phenolic propionic ester derivatives. Bis-phenolic antioxidants may also be used in combination with the present invention. Examples of ortho-coupled phenols include: 2,2'-bis(4-heptyl-6-t-butyl-phenol); 2,2'-bis(4- octyl-6-t-butyl-phenol); and 2,2'-bis(4-dodecyl-6-t-butyl-phenol). Para-coupled bisphenols include for example 4,4'-bis(2,6-di-t-butyl phenol) and 4,4' methylene-bis(2,6-di-t-butyl phenol).

Non-phenolic oxidation inhibitors which may be used include aromatic amine antioxidants and these may be used either as such or in combination with phenolics. Typical examples of non-phenolic antioxidants include: alkylated and non-alkylated aromatic amines such as aromatic monoamines of the formula R⁸R⁹R¹⁰N, where R⁸ is an aliphatic, aromatic or substituted aromatic group, R⁹ is an aromatic or a substituted aromatic group, and R¹⁰ is H, alkyl, aryl or R¹¹S(O)ₓR¹², where R¹¹ is an alkylene, alkenylene, or aralkylene group, R¹² is a higher alkyl group, or an alkenyl, aryl, or alkaryl group, and x is 0, 1 or 2. The aliphatic group R⁸ may contain from 1 to about 20 carbon atoms, and preferably contains from about 6 to 12 carbon atoms. The aliphatic group is a saturated aliphatic group. Preferably, both R⁸ and R⁹ are aromatic or substituted aromatic groups, and the aromatic group may be a fused ring aromatic group such as naphthyl. Aromatic groups R⁸ and R⁹ may be joined together with other groups such as S.

Typical aromatic amines antioxidants have alkyl substituent groups of at least about 6 carbon atoms. Examples of aliphatic groups include hexyl, heptyl, octyl, nonyl, and decyl. Generally, the aliphatic groups will not contain more than about 14 carbon atoms. The general types of amine antioxidants useful in the present compositions include diphenylamines, phenyl naphthylamines, phenothiazines, imidodibenzyls and diphenyl phenylene diamines. Mixtures of two or more aromatic amines are also useful. Polymeric amine antioxidants can also be used. Particular examples of aromatic amine antioxidants useful in the present invention include:
p,p'-dioctyldiphenylamine; t-octylphenyl-alpha naphthylamine; phenyl-alphanaphthylamine; and p-octylphenyl-alphanaphthylamine. Sulfurized alkyl phenols and alkali or alkaline earth metal salts thereof also are useful antioxidants.

**Corrosion inhibitors** may include various oxygen-, nitrogen-, sulfur-, and phosphorus-containing materials, and may include metal-containing compounds (salts, organometallics, etc.) and nonmetal-containing or ashless materials. Corrosion inhibitors may include, but are not limited to, additive types such as, for example, hydrocarbyl-, aryl-, alkyl-, arylalkyl-, and alkylaryl versions of detergents (neutral, overbased), sulfonates, phenates, salicylates, alcoholates, carboxylates, salixarates, phosphites, phosphates, thiophosphates, amines, amine salts, amine phosphoric acid salts, amine sulfonic acid salts, alkoxylated amines, etheramines, polyether-amines, amides, imides, azoles, diazoles, triazoles, benzotriazoles, benzothiadoles, mercapto-benzothiazoles, tolyltriazoles (TTZ-type), heterocyclic amines, heterocyclic sulfides, thiazoles, thiadiazoles, mercaptothiadiazoles, dimercaptothiadiazoles (DMTD-type), imidazoles, benzimidazoles, dithiobenzimidazoles, imidazolines, oxazolines, Mannich reactions products, glycidyl ethers, anhydrides, carbamates, thiocarbamates, dithiocarbamates, polyglycols, etc., or mixtures thereof.

**Detergents** include cleaning agents that adhere to dirt particles, preventing them from attaching to critical surfaces. Detergents may also adhere to the metal surface itself to keep it clean and prevent corrosion from occurring. Detergents include calcium alkylsalicylates, calcium alkylphe-nates and calcium alkarylsulfonates with alternate metal ions used such as magnesium, barium, or sodium. Examples of the cleaning and dispersing agents which can be used include metal-based detergents such as the neutral and basic alkaline earth metal sulphonates, alkaline earth metal phenates and alkaline earth metal salicylates alkenylsuccinimide and alkenylsuccinimide esters and their borohydrides, phenates, salienius complex detergents and ashless dispersing agents which have been modified with sulphur compounds. These agents can be added and used individually or in the form of mixtures, conveniently in an amount within the range of from ≥ 0.01 to ≤ 1.0 % by weight in relation to the weight of the base stock; these can also be high total base number (TBN), low TBN, or mixtures of high/low TBN.

**Dispersants** are lubricant additives that help to prevent sludge, varnish and other deposits from forming on critical surfaces. The dispersant may be a succinimide dispersant (for example

N-substituted long chain alkenyl succinimides), a Mannich dispersant, an ester-containing dispersant, a condensation product of a fatty hydrocarbyl monocarboxylic acylating agent with an amine or ammonia, an alkyl amino phenol dispersant, a hydrocarbyl-amine dispersant, a polyether dispersant or a polyetheramine dispersant. In one embodiment, the succinimide dispersant includes a polyisobutylene-substituted succinimide, wherein the polyisobutylene from which the dispersant is derived may have a number average molecular weight of about 400 to about 5000, or of about 950 to about 1600. In one embodiment, the dispersant includes a borated dispersant. Typically, the borated dispersant includes a succinimide dispersant including a polyisobutylene succinimide, wherein the polyisobutylene from which the dispersant is derived may have a number average molecular weight of about 400 to about 5000. Borated dispersants are described in more detail above within the extreme pressure agent description.

**Anti-foam agents** may be selected from silicones, polyacrylates, and the like. The amount of anti-foam agent in the lubricant compositions described herein may range from ≥ 0.001 wt.-% to≤ 0.1 wt.-% based on the total weight of the formulation. As a further example, an anti-foam agent may be present in an amount from about 0.004 wt.-% to about 0.008 wt.-%.

Suitable **extreme pressure agent** is a sulfurcontaining compound. In one embodiment, the sulfur-containing compound may be a sulfurised olefin, a polysulfide, or mixtures thereof. Examples of the sulfurised olefin include a sulfurised olefin derived from propylene, isobutylene, pentene; an organic sulfide and/or polysulfide including benzyldisulfide; bis-(chlorobenzyl) disulfide; dibutyl tetrasulfide; di-tertiary butyl polysulfide; and sulfurised methyl ester of oleic acid, a sulfurised alkylphenol, a sulfurised dipentene, a sulfurised terpene, a sulfurised Diels-Alder adduct, an alkyl sulphenyl N'N dialkyl dithiocarbamates; or mixtures thereof. In one embodiment, the sulfurised olefin includes a sulfurised olefin derived from propylene, isobutylene, pentene or mixtures thereof. In one embodiment the extreme pressure additive sulfur-containing compound includes a dimercaptothiadiazole or derivative, or mixtures thereof. Examples of the dimercaptothiadiazole include compounds such as 2,5-dimercapto-1,3,4-thiadiazole or a hydrocarbyl-substituted 2,5-dimercapto-1,3,4-thiadiazole, or oligomers thereof. The oligomers of hydrocarbyl-substituted 2,5-dimercapto-1,3,4-thiadiazole typically form by forming a sulfur-sulfur bond between 2,5-dimercapto-1,3,4-thiadiazole units to form derivatives or oligomers of two or more of said thiadiazole units. Suitable 2,5-dimercapto-1,3,4-thiadiazole derived compounds include for example 2,5-bis(tert-nonyldithio)-1,3,4-thiadiazole or 2-tert-nonyldithio-5-mercapto-1,3,4-thiadiazole. The number of carbon atoms on the hydrocar-byl substituents of the hydrocarbyl-substituted 2,5-dimercapto-1,3,4-thiadiazole typically include 1 to 30, or 2 to 20, or 3 to 16. Extreme pressure additives include compounds containing boron and/or sulfur and/or phosphorus. The extreme pressure agent may be present in the lubricant compositions at 0 wt.-% to about 20 wt.-%, or at about 0.05 wt.-% to about 10.0 wt.-%, or at about 0.1 wt.-% to about 8 wt.-% of the lubricant composition.

Examples of **anti-wear additives** include organo borates, organo phosphites such as didodecyl phosphite, organic sulfur-containing compounds such as sulfurized sperm oil or sulfurized terpenes, zinc dialkyl dithiophosphates, zinc diaryl dithiophosphates, phosphosulfurized hydrocarbons and any combinations thereof.

**Friction modifiers** may include metal-containing compounds or materials as well as ashless compounds or materials, or mixtures thereof. Metal-containing friction modifiers include metal salts or metalligand complexes where the metals may include alkali, alkaline earth, or transition group metals. Such metal-containing friction modifiers may also have lowash characteristics. Transition metals may include Mo, Sb, Sn, Fe, Cu, Zn, and others. Ligands may include hydrocarbyl derivative of alcohols, polyols, glycerols, partial ester glycerols, thiols, carboxy-lates, carbamates, thiocarbamates, dithiocarbamates, phosphates, thiophosphates, dithiophosphates, amides, imides, amines, thiazoles, thiadiazoles, dithiazoles, diazoles, triazoles, and other polar molecular functional groups containing effective amounts of O, N, S, or P, individually or in combination. In particular, Mo-containing compounds can be particularly effective such as for example Mo-dithiocarbamates, Mo(DTC), Mo-dithiophosphates, Mo(DTP), Mo-amines, Mo (Am), Mo-alcoholates, Mo alcohol-amides, and the like.

Ashless friction modifiers may also include lubricant materials that contain effective amounts of polar groups, for example, hydroxyl-containing hydrocarbyl base oils, glycerides, partial glycerides, glyceride derivatives, and the like. Polar groups in friction modifiers may include hydrocarbyl groups containing effective amounts of O, N, S, or P, individually or in combination. Other friction modifiers that may be particularly effective include, for example, salts (both ash-containing and ashless derivatives) of fatty acids, fatty alcohols, fatty amides, fatty esters, hydroxyl-containing carboxylates, and comparable synthetic long-chain hydrocarbyl acids, alcohols, amides, esters, hydroxy carboxylates, and the like. In some instances, fatty organic acids, fatty amines, and sulfurized fatty acids may be used as suitable friction modifiers. Examples of friction modifiers include fatty acid esters and amides, organo molybdenum compounds, molybdenum dialkylthiocarbamates and molybdenum dialkyl dithiophosphates.

Suitable **metal deactivators** include benzotriazoles and derivatives thereof, for example 4- or 5-alkylbenzotriazoles (e.g. triazole) and derivatives thereof, 4,5,6,7-tetrahydrobenzotriazole and 5,5'-methylenebisbenzotriazole; Mannich bases of benzotriazole or triazole, e.g. 1-[bis(2-ethyl-hexyl) aminomethyl) triazole and 1-[bis(2- ethylhexyl) aminomethyl)benzotriazole; and alkoxyal-kylbenzotriazoles such as 1-(nonyloxymethyl)benzotriazole, 1-(1-butoxyethyl) benzotriazole and 1-(1-cyclohexyloxybutyl) triazole, and combinations thereof. Additional non-limiting examples of the one or more metal deactivators include 1,2,4-triazoles and derivatives thereof, for example 3-alkyl(or aryl)-1, 2,4-triazoles, and Mannich bases of 1,2,4-triazoles, such as 1-[bis(2-ethylhexyl) aminomethy1-1, 2,4-triazole; alkoxyalky1-1, 2,4-triazoles such as 1-(1-bu-toxyethyl)-1, 2,4-triazole; and acylated 3-amino-1, 2,4-triazoles, imidazole derivatives, for example 4,4'-methylenebis(2-undecyl-5-methylimidazole) and bis[(N-methyl)imidazol-2-yl]car-binol octyl ether, and combinations thereof. Further non-limiting examples of the one or more metal deactivators include sulfur-containing heterocyclic compounds, for example 2-mercaptobenzothiazole, 2,5-dimercapto-1, 3,4-thia-diazole and derivatives thereof; and 3,5-bis[di(2-ethylhexyl) aminomethyl]-1, 3,4-thiadiazolin-2-one, and combinations thereof. Even further non-limiting examples of the one or more metal deactivators include amino compounds, for example salicylidenepropylenediamine, salicylami-noguanidine and salts thereof, and combinations thereof. The one or more metal deactivators are not particularly limited in amount in the composition but are typically present in an amount of from about 0.01 to about 0.1, from about 0.05 to about 0.01, or from about 0.07 to about 0.1, wt.-% based on the weight of the composition. Alternatively, the one or more metal deactivators may be present in amounts of less than about 0.1, of less than about 0.7, or less than about 0.5, wt.-% based on the weight of the composition.

**Pour point depressants** (PPD) include polymethacrylates, alkylated naphthalene derivatives, and combinations thereof. Commonly used additives such as alkylaromatic polymers and polymethacrylates are also useful for this purpose. Typically, the treat rates range from ≥ 0.001 wt.-% to ≤ 1.0 wt.-%, in relation to the weight of the base stock.

**Demulsifiers** include trialkyl phosphates, and various polymers and copolymers of ethylene glycol, ethylene oxide, propylene oxide, or mixtures thereof.

The invention also relates to a **use** of the comb copolymer or the comb copolymer obtainable by the method according the invention for improving the viscosity index of the lubricant.

### Examples

### Example 1 - Macromonomer

Polyisobutylene amine (1006 g, Mn about 1000 g/mol, degree of functionalization 60-70 %, 65 wt% solution in C₁₀-C₁₃ n-paraffins, amine number 24,5 g KOH, 0,44 mol -NH₂), 0,44 g butylhydroxytoluol BHT and 86,5 g (0,56 mol) methacrylic acid anhydride MAAh were mixed at room temperature. The reaction was followed by 1H-NMR. After 20 h when conversion to the amide was quantitative 300 g water were added and heated to 90 °C The hydrolysis of the excess methacrylic acid anhydride was followed by 1H-NMR. After 15 h when hydrolysis was quantitative the reaction mixture was cooled to room temperature, the aqueous phase was separated, 1,13 g MeHQ were added and excess water and MAA were removed at a bath temperature of 80 °C under vacuum. In addition, parts of the C₁₀-C₁₃ n-paraffins were distilled off. The quantitative removal of the MAA trace was followed by 1H-NMR. Finally, 833 g of the macromonomer in C₁₀-C₁₃ n-paraffins were obtained as 80.8% solution.

### Example 2 - Macromonomer

The reaction was performed as described in Example 1 using 1170 g of polyisobutylene amine, 0,5 g BHT and 96,6 g MAAh. 300 g water were added and after hydrolysis as in Example 1 the aqueous phase was separated. Then 250 g water and 50 g aqueous NaOH (12,5 wt%) were added, mixed and after settling the aqueous phase separated. The organic phase was washed twice with 300 g water, then 1,21 g MeHQ were added. Quantitative extraction of methacrylic acid MAAwas controlled by 1H NMR. Remaining water was removed at a bath temperature of 80 °C under vacuum A part of the C₁₀-C₁₃ n-paraffins was also distilled off. Finally, 915 g of the macromonomer in C₁₀-C₁₃ n-paraffins were obtained as 85.6% solution.

### Example 3 - Macromonomer

The reaction was performed as described in Example 1 using 1100 g of polyisobutylene amine, 0,47 g BHT and 93,4 g MAAh. Then 250 g water and 50 g aqueous NaOH (12,5 wt%) were added and heated to 40-53 °C The hydrolysis of the excess methacrylic acid anhydride was followed by 1H-NMR. After 4.5 h hydrolysis was quantitative and the mixture was cooled down to ambient temperature. The aqueous phase was separated, the organic phase was washed twice with 300 g water, then 1,13 g MeHQ were added. Quantitative extraction of MAA was controlled by 1H NMR. Remaining water was removed by reducing stepwise the vacuum at a bath temperature of 80 °C. A part of the C₁₀-C₁₃ n-paraffins was also distilled off. Finally, 896 g of the macromonomer in C₁₀-C₁₃ n-paraffins were obtained as 82.2% solution.

### Example 4 - Macromonomer

The reaction was performed as described in Example 1 using 557 g of polyisobutylene amine, 0,24 g BHT and 47,87 g MAAh. 150 g water were added, and after hydrolysis as in Example 1 the aqueous phase was separated. Then 125 g water and 25 g aqueous NaOH (12,5 wt%) were added and the aqueous phase separated. The organic phase was washed twice with 150 g water. Quantitative extraction of MAA was controlled by 1H NMR. 100 g cyclohexane were added to the organic phase. Cyclohexane and the remaining water were removed at a bath temperature of 60 °C slowly under vacuum whilst reducing stepwise the vacuum to finally yield a water- and cyclohexane-free product solution. A part of the C₁₀-C₁₃ n-paraffins was also distilled off. Finally, 427 g of the macromonomer in C₁₀-C₁₃ n-paraffins were obtained as 87.3% solution.

### Example 5 - Polymerization

In reactor were added:
- 58,4 g Macromonomer PIB Amid from Example 2 (85,6 wt% solution)
- 175 g EHMA 2-Ethylhexyl methacrylate
- 25 g MMA Methyl methacrylate
- 0,25 g TDDM tert-dodecyl mercaptan
- 158 g Nexbase^{®} 3030

The monomers % by weight were: 20 wt% PIB amid, 70 wt% EHMA, 10 wt% MMA.

The mixture was heated under N2 and under stirring up to 95°C. As soon as the 95 °C were achieved then within 5 minutes 1/3 of the total solution of initiator terbutyl-peroxyethyl-hexanoate TBPEH was added (3 g TBPEH in 29,64 g of Catenex T121 is the total solution) correponding with a mass of 0,64 g of TBPEH in 6,38 g of Catenex T121. The mixture was stirred for additionally 10 minutes. After that 2/3 of the TBPEH solution was added in 3 portions during 3 hours: Portion 1 = 1 g, Portion 2 = 2 g, Portion 3: 2 g. After that the mixture was treated during 1 hour at 95°C. A last addition of 5,56 g of the 9% solution of TBPEH was added and the mixture is stirred at 95°C for 1 additional hour.

After 1 hour 408.31 g of Nextbase^{®} 3030 (hydrogenated, highly isoparaffinic hydrocarbons base stock, from Neste) were added to bring the total polymer content to approx. 30%. The mixture was stirred during 30 min for homogeneity.

The molecular weight was determined by GPC with polystyrol calibration: Mn 106.000 g/mol, Mw 391.000 g/mol, PDI 3,7.

The application test results were as follows:

| | |
|---|---|
| KV100: | 245 mm²/s (30 wt% polymer solution) |
| KV40: | 32,6 mm²/s (5 wt% of the 30 wt% polymer solution) |
| KV100: | 7,2 mm²/s (5 wt% of the 30 wt% polymer solution) |
| VI: | 195 |
| Pour Point: | -18 °C |

The kinematic viscosity at 100 °C (KV100) of the lubricant was determined according to ASTM D445/446. The higher the viscosity index VI (DIN ISO 2909), the smaller the effect of temperature on the kinematic viscosity.

### Example 6 - Polymerization

In reactor were added:
- 62,07 g Macromonomer PIB Amid from Example 4
- 163 g EHMA 2-Ethylhexyl methacrylate
- 27,25 g MMA Methyl methacrylate
- 27,25 g LMA Laurylmethacrylate
- 0,27 g TDDM tert-dodecyl mercaptan
- 139,30 g DPHA di-(2-propylheptyl) adipate

The monomers % by weight were: 20 wt% PIB amid, 60 wt% EHMA, 10 wt% MMA, 10% LMA.

The mixture was heated under N2 and under stirring up to 95°C. As soon as the 95 °C were achieved then within 5 minutes 1/3 of the total solution of initiator terbutyl-peroxyethyl-hexanoate TBPEH was added (0,7 g TBPEH in 6,95 g of Catenex T121 is the total solution) correponding with a mass of 0,25 g of TBPEH in 2,27 g of Catenex T121. The mixture was stirred for additionally 10 minutes. After that 2/3 of the TBPEH solution was added in 3 portions during 3 hours: Portion 1 = 1 g, Portion 2 = 2 g, Portion 3: 2 g. After that the mixture was treated during 1 hour at 95°C. A last addition of 6,06 g of the 9% solution of TBPEH was added and the mixture is stirred at 95°C for 1 additional hour.

After 1 hour 480 g of di-(2-propylheptyl) adipate were added to bring the total polymer content to approx. 30%. The mixture was stirred during 30 min for homogeneity.

The molecular weight was determined by GPC with polystyrol calibration: Mn 88.000 g/mol, Mw 412.000 g/mol, PDI 4,7.

The application test results were as follows:

| | |
|---|---|
| KV100: | 375 mm²/s (30 wt% polymer solution) |
| KV40: | 35,1 mm²/s (5 wt% of the 30 wt% polymer solution) |
| KV100: | 7,3mm²/s (5 wt% of the 30 wt% polymer solution) |
| VI: | 181 |
| Pour Point: | -18 °C |

The kinematic viscosity at 100 °C (KV100) of the lubricant was determined according to ASTM D445/446. The higher the viscosity index VI (DIN ISO 2909), the smaller the effect of temperature on the kinematic viscosity.

### Example 7 - Comparative Polymer

A copolymer was prepared with a monomer composition as disclosed in Example 10 of WO 2007/003238 based on 41 wt% PIB amid and 59 wt% NBMA according to the method described in above Example 5. At the end of the polymerization Nextbase^{®} 3030 was added to bring the total polymer content to approx. 30%.

The molecular weight was determined by GPC with polystyrol calibration: Mn 79.800 g/mol, Mw 747.000 g/mol, PD 9,4.

The application test results were as follows:

| | |
|---|---|
| KV100: | 97 mm²/s (30 wt% polymer solution) |
| KV40: | 31,1 mm²/s (5 wt% of the 30 wt% polymer solution) |
| KV100: | 6,0 mm²/s (5 wt% of the 30 wt% polymer solution) |
| VI: | 141 |
| Pour Point: | -18 °C |

This comparative experiment demonstrated that the copolymer in Example 10 of WO 2007/003238 has a lower VI and an bad shear stability.

### Example 8 - Polymerization

In reactor were added:
- 74,59 g Macromonomer PIB Amid (solid content 72,4 wt%)
- 97,2 g EHMA 2-Ethylhexyl methacrylate
- 40,8 g MMA Methyl methacrylate
- 48,0 g SMA Stearyl methacrylate
- 0,20 g TDDM tert-dodecyl mercaptan
- 148,8 g Yubase^{®} 3 mineral oil

The monomers % by weight were: 22,5 wt% PIB amid, 40,5 wt% EHMA, 17 wt% MMA, 20% SMA.

The mixture was heated under N2 and under stirring up to 95°C. As soon as the 95 °C were achieved then within 5 minutes 1/3 of the total solution of initiator terbutyl-peroxyethyl-hexanoate TBPEH was added (0,6 g TBPEH in 6,26 g of Catenex T121 is the total solution). The mixture was stirred for additionally 10 minutes. After that the residual 2/3 of the TBPEH solution. After that the mixture was treated during 1 hour at 95°C. A last addition of a solution of 0,49 g TBPEH in 4,95 g of Catenex T121 was added and the mixture is stirred at 95°C for 1 additional hour. Finally, 180 g of Yubase^{®} 3 (a hydrotreated light paraffinic mineral oil, KV40 12,4 mm²/s, KV100 3,12 mm²/s, VI 112) were added to bring the total polymer content to approx. 40%. The mixture was stirred during 60 min for homogeneity.

The molecular weight was determined by GPC with polystyrol calibration: Mn 99.300 g/mol, Mw 301.000 g/mol, PDI 3.

The application test results were as follows:

| | |
|---|---|
| KV100: | 1062 mm²/s (40 wt% polymer solution) |
| KV40: | 35,5 mm²/s (5 wt% of the 40 wt% polymer solution) |
| KV100: | 7,62 mm²/s (5 wt% of the 40 wt% polymer solution) |
| VI: | 191 |
| Pour Point: | -18 °C |

The kinematic viscosity at 100 °C (KV100) of the lubricant was determined according to ASTM D445/446. The higher the viscosity index VI (DIN ISO 2909), the smaller the effect of temperature on the kinematic viscosity.

## Claims

1. A comb copolymer comprising in polymerized form
(A) up to 40 wt% of a PIB macromonomer of the formula (I) 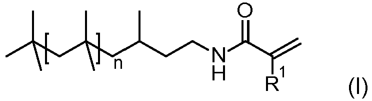 where R¹ is H or methyl, and n is a number from 5 to 100 , and
(B) a hydrophobic monomer of the formula (II)
H₂C=C(R¹)COOR² (II)
where R¹ is H or methyl, and R² is C₅₋₃₆ alkyl.

2. The comb copolymer according to claim 1 where R² is hexyl, heptyl, octyl, 2-ethylhexyl, 2-propyl heptyl, 2-butyloctyl, nonyl, decyl, stearyl, lauryl, octadecyl, heptadecyl, 2-hexyldecyl, nonadecyl, eicosyl, henicosyl, docosyl, or mixtures thereof.

3. The comb copolymer according to claim 1 or 2 where R² is a mixture of at least two residues selected from the group consisting of hexyl, heptyl, octyl, 2-ethylhexyl, 2-propyl heptyl, 2-butyloctyl, nonyl, decyl, stearyl, lauryl, octadecyl, heptadecyl, 2-hexyldecyl, and nonadecyl.

4. The comb copolymer according to any of claims 1 to 3 further comprising a hydrophilic monomer of the formula (III)
H₂C=C(R¹)COOR³ (III)
where R³ is C₁₋₄ alkyl.

5. The comb copolymer according to any of claims 1 to 4 comprising 5 - 30 wt% PIB macromonomer.

6. The comb copolymer according to any of claims 1 to 5 comprising at least 30 wt% hydrophobic monomer.

7. The comb copolymer according to any of claims 1 to 6 comprising 40 - 90 wt% hydrophobic monomer.

8. The comb copolymer according to any of claims 1 to 7 comprising 1 - 25 wt% hydrophilic monomer.

9. The comb copolymer according to any of claims 1 to 8 comprising
- 5 - 30 wt% PIB macromonomer,
- 50 - 90 wt% hydrophobic monomer, and
- 1 - 25 wt% hydrophilic monomer,
where the sum of all monomers is 100 wt%.

10. A method of preparing the PIB macromonomer of the formula (I) 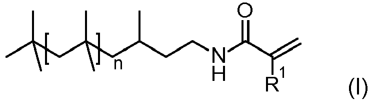
where R¹ is H or methyl, and n is a number from 5 to 100 ,
where a polyisobutene amine of the formula (IV) 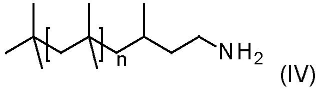
is reacted with (meth)acrylic acid anhydride.

11. The method according to claim 10 where the (meth)acrylic acid anhydride is present in a molar excess in relation to the polyisobutene amine.

12. The method according to claim 10 or 11 where the reaction is followed by hydrolysis of the remaining (meth)acrylic acid anhydride to form (meth)acrylic acid.

13. The method according to claim 12 where the (meth)acrylic acid is removed by distillation or by extraction with water.

14. A lubricant comprising
(i) a base oil,
(ii) the comb copolymer according to any of claims 1 to 9, and
(iii) further lubricant additives.

15. A use of the comb copolymer according to any of claims 1 to 9 for improving the viscosity index of a lubricating oil.

## Patentansprüche

1. Kamm-Copolymer, umfassend in polymerisierter Form
(A) bis zu 40 Gew.-% eines PIB-Makromonomers der Formel (I) 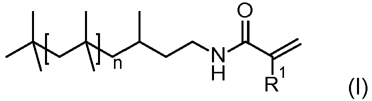 wobei R¹ H oder Methyl und n eine Zahl zwischen 5 und 100 ist und
(B) ein hydrophobes Monomer der Formel (II)
H₂C=C(R¹)COOR² (II)
wobei R¹ H oder Methyl und R² C₅₋₃₆-Alkyl ist.

2. Kamm-Copolymer nach Anspruch 1, wobei R² Hexyl, Heptyl, Octyl, 2-Ethylhexyl, 2-Propylheptyl, 2-Butyloctyl, Nonyl, Decyl, Stearyl, Lauryl, Octadecyl, Heptadecyl, 2-Hexyldecyl, Nonadecyl, Eicosyl, Henicosyl, Docosyl oder Mischungen davon ist.

3. Wabencopolymer nach Anspruch 1 oder 2, wobei R² ein Gemisch aus mindestens zwei Resten ist, ausgewählt aus der Gruppe bestehend aus Hexyl, Heptyl, Octyl, 2-Ethylhexyl, 2-Propylheptyl, 2-Butyloctyl, Nonyl, Decyl, Stearyl, Lauryl, Octadecyl, Heptadecyl, 2-Hexyldecyl und Nonadecyl.

4. Kamm-Copolymer nach einem der Ansprüche 1 bis 3, ferner umfassend ein hydrophiles Monomer der Formel (III)
H₂C=C(R¹)COOR³ (III)
wobei R³ C₁₋₄-Alkyl ist.

5. Kamm-Copolymer nach einem der Ansprüche 1 bis 4 mit 5 - 30 Gew.-% PIB-Makromonomer.

6. Kamm-Copolymer nach einem der Ansprüche 1 bis 5 mit mindestens 30 Gew.-% hydrophobem Monomer.

7. Kamm-Copolymer nach einem der Ansprüche 1 bis 6 mit 40 - 90 Gew.-% hydrophobem Monomer.

8. Kamm-Copolymer nach einem der Ansprüche 1 bis 7 mit 1 - 25 Gew.-% hydrophilem Monomer.

9. Kamm-Copolymer nach einem der Ansprüche 1 bis 8, umfassend
- 5 - 30 Gew.-% PIB-Makromonomer,
- 50 - 90 Gew.-% hydrophobes Monomer und
- 1 - 25 Gew.-% hydrophiles Monomer,
wobei die Summe aller Monomere 100 Gew.-% beträgt.

10. Verfahren zur Herstellung des PIB-Makromonomers der Formel (I) 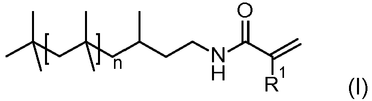
wobei R¹ H oder Methyl und n eine Zahl zwischen 5 und 100 ist,
wobei ein Polyisobutenamin der Formel (IV) 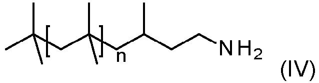
wird mit (Meth)acrylsäureanhydrid umgesetzt.

11. Verfahren nach Anspruch 10, bei dem das (Meth)acrylsäureanhydrid in einem molaren Überschuss in Bezug auf das Polyisobutenamin vorliegt.

12. Verfahren nach Anspruch 10 oder 11, wobei auf die Reaktion eine Hydrolyse des verbleibenden (Meth)acrylsäureanhydrids folgt, um (Meth)acrylsäure zu bilden.

13. Verfahren nach Anspruch 12, bei dem die (Meth)acrylsäure durch Destillation oder durch Extraktion mit Wasser entfernt wird.

14. Ein Schmiermittel, bestehend aus
(i) ein Grundöl,
(ii) Kamm-Copolymer nach einem der Ansprüche 1 bis 9 und
(iii) weitere Schmierstoffadditive.

15. Verwendung des Kamm-Copolymers nach einem der Ansprüche 1 bis 9 zur Verbesserung des Viskositätsindex eines Schmieröls.

## Revendications

1. Copolymère en peigne comprenant sous forme polymérisée
(A) jusqu'à 40 % en poids d'un macromonomère PIB de formule (I) 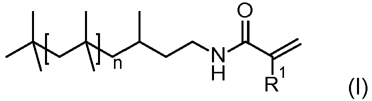 où R¹ est H ou méthyle, et n est un nombre compris entre 5 et 100 , et
(B) un monomère hydrophobe de formule (II)
H₂C=C(R¹)COOR² (II)
où R¹ est H ou méthyle, et R² est alkyle en C₅₋₃₆.

2. Copolymère en peigne selon la revendication 1 où R² est hexyle, heptyle, octyle, 2-éthylhexyle, 2-propyl heptyle, 2-butyloctyle, nonyle, décyle, stéaryle, lauryl, octadécyle, heptadecyle, 2-hexyldécyle, nonadecyle, eicosyle, henicosyl, docosyle, ou des mélanges de ceux-ci.

3. Copolymère en peigne selon la revendication 1 ou 2, où R² est un mélange d'au moins deux résidus choisis dans le groupe constitué par l'hexyle, l'heptyle, l'octyle, le 2-éthylhexyle, le 2-propyle heptyle, le 2-butyloctyle, le nonyle, le décyle, le stéaryle, le lauryl, l'octadécyle, l'heptadécyle, le 2-hexyldécyle et le nonadecyle.

4. Copolymère en peigne selon l'une quelconque des revendications 1 à 3, comprenant en outre un monomère hydrophile de formule (III)
H₂C=C(R¹)COOR³ (III)
où R³ est un alkyle en C₁₋₄.

5. Copolymère en peigne selon l'une quelconque des revendications 1 à 4, comprenant 5 à 30 % en poids de macromonomère PIB.

6. Copolymère en peigne selon l'une quelconque des revendications 1 à 5, comprenant au moins 30 % en poids de monomère hydrophobe.

7. Copolymère en peigne selon l'une quelconque des revendications 1 à 6, comprenant 40 à 90 % en poids de monomère hydrophobe.

8. Copolymère en peigne selon l'une quelconque des revendications 1 à 7, comprenant 1 à 25 % en poids de monomère hydrophile.

9. Copolymère en peigne selon l'une quelconque des revendications 1 à 8, comprenant
- 5 à 30 % en poids de PIB macromonomère,
- 50 à 90 % en poids de monomère hydrophobe, et
- 1 à 25 % en poids de monomère hydrophile,
où la somme de tous les monomères est de 100 % en poids.

10. Méthode de préparation du macromonomère PIB de formule (I) 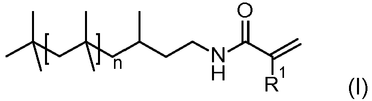
où R¹ est H ou méthyle, et n est un nombre compris entre 5 et 100,
lorsqu'une amine polyisobutène de formule (IV) 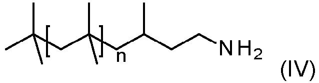
réagit avec l'anhydride de l'acide (méth)acrylique.

11. Procédé selon la revendication 10, dans lequel l'anhydride d'acide (méth)acrylique est présent dans un excès molaire par rapport à l'amine polyisobutène.

12. Procédé selon la revendication 10 ou 11, dans lequel la réaction est suivie d'une hydrolyse de l'anhydride d'acide (méth)acrylique restant pour former de l'acide (méth)acrylique.

13. Procédé selon la revendication 12, dans lequel l'acide (méth)acrylique est éliminé par distillation ou par extraction à l'eau.

14. Lubrifiant comprenant
(i) une huile de base,
(ii) le copolymère en peigne selon l'une quelconque des revendications 1 à 9, et
(iii) d'autres additifs lubrifiants.

15. Utilisation du copolymère en peigne selon l'une quelconque des revendications 1 à 9 pour améliorer l'indice de viscosité d'une huile lubrifiante.
